(19) Europäisches Patentamt / European Patent Office / Office européen des brevets

(11) **EP 3 399 866 B1**

## (12) EUROPEAN PATENT SPECIFICATION

(45) Date of publication and mention
of the grant of the patent:
**10.07.2019   Bulletin 2019/28**

(21) Application number: **16809047.0**

(22) Date of filing: **09.12.2016**

(51) Int Cl.:
*A23G 9/08* (2006.01)          *A23G 9/22* (2006.01)
*A23G 9/28* (2006.01)

(86) International application number:
**PCT/EP2016/080424**

(87) International publication number:
**WO 2017/118522 (13.07.2017 Gazette 2017/28)**

(54) **APPARATUS FOR DELIVERING FROZEN CONFECTION COMPRISING PARTICULATE MATERIAL**

VORRICHTUNG ZUR ABGABE VON EISKONFEKT MIT PARTIKELMATERIAL

APPAREIL POUR DÉLIVRER UNE CONFISERIE CONGELÉE CONTENANT UN MATÉRIAU PARTICULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **08.01.2016   EP 16150638**

(43) Date of publication of application:
**14.11.2018   Bulletin 2018/46**

(73) Proprietors:
• **Unilever PLC**
  **London, Greater London EC4Y 0DY (GB)**
  Designated Contracting States:
  **CY GB IE MT**
• **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**

(72) Inventors:
• **CRUNDWELL, Ben, James**
  **Toft**
  **Cambridge CB23 2RF (GB)**
• **JACOB, Varkey, Berty**
  **Bedford**
  **Bedfordshire MK44 1LQ (GB)**
• **SCOTT, Paul**
  **Toft**
  **Cambridge CB23 2RF (GB)**

(74) Representative: **Askew, Sarah Elizabeth**
  **Unilever PLC**
  **Unilever Patent Group**
  **Colworth House**
  **Sharnbrook**
  **Bedford MK44 1LQ (GB)**

(56) References cited:
**EP-A1- 2 255 673          WO-A1-2011/162796
US-A1- 2003 183 090      US-B1- 7 621 669**

EP 3 399 866 B1

## Description

### Technical field

The invention relates to an apparatus for dispensing frozen confectionery, particularly a single serving thereof, comprising particulate material, particularly mixed-in particulate material.

### Background and prior art

There is a significant consumer demand for frozen confectionery, particularly ice cream, which contains particulate material. When such particulate material is not merely added as a topping but is mixed into the frozen confectionery then they are also referred to as mix-ins.

Apparatus and machines exist which are capable of dispensing a frozen confectionery with a selection of mix-ins that have been selected by an end user. However, almost all of these are for out-of-home use only and are too bulky to be used in an in-home environment.

WO 2011/162796 discloses an apparatus which delivers ice cream and particulate material simultaneously as a single-serve. It also discloses the use of a handle to actuate both the delivery of the ice cream and particulate material simultaneously when the particulate material dispenser is powered. When the particulate material dispenser is not powered it teaches two separate manual actuators for independent control over the delivery of the frozen confection and particulate material respectively.

The machine therefore does not allow the independent control of the delivery of frozen confection and particulate material in a convenient manner.

US 7,621,669 and US 2003/0183090 also disclose devices with a handle that actuates both the ice cream and the particulate material in a non-independent manner.

Improvements in this area would therefore be highly desirable.

### Summary of Invention

The invention relates to an apparatus for dispensing frozen confectionery comprising particulate material, the apparatus comprising:

a frozen confectionery dispenser,
a particulate material dispenser, and
a handle means;

wherein the handle means is adapted to provide a first actuation action for activation of the frozen confectionery dispenser and a second actuation action for activation of the particulate material dispenser, wherein the first and second actuation actions are independent of each other.

Thus the handle means can actuate both the frozen confectionery dispenser and the particulate material dispenser independently of each other. This allows an end user to carry out the first actuation action to dispense the frozen confection and choose to what extent the second activation action is carried out, to provide control over the degree of activation of the particulate material dispenser. For example, a user could dispense, in one extreme, frozen confectionery with no particulate material at all, and in another extreme, frozen confectionery with a large quantity of particulate material. In addition this flexibility of delivery is provided by a single handle means, which is a particularly convenient method of delivery.

Thus, as the actuation of the particulate material is independently actuated to the actuation of the frozen confection, the first actuation action does not actuate the particulate material dispenser and the second actuation action does not actuate the frozen confectionery dispenser.

In a preferred embodiment the first actuation action comprises translation of the handle means, e.g. moving the handle means from an upper to a lower position. In a preferred embodiment this can actuate a valve which allows the frozen confectionery to be dispensed. In this embodiment it is preferred that the frozen confectionery will be held under pressure so that as soon as the valve is opened, frozen confectionery begins to be dispensed.

Thus, in a particularly convenient embodiment the first actuation action comprises movement of the handle means from an upper position, e.g. wherein a valve is closed, to a lower position, e.g. wherein a valve is open, the valve gradually opening as the handle moves from the upper to the lower position.

In a preferred embodiment, the second actuation action comprises pressing a switch or button. For example, in a preferred embodiment, the second actuation action comprises a button located on the handle means. In this way the button provides independent control of the particulate material dispenser, if for example the first actuation action involves translation of the handle means, as discussed above.

In a preferred embodiment the handle means comprises a region which is grippable by a single human hand so that the single human hand is capable of carrying out both the first and second actuations actions independently of each other.

In a preferred embodiment, a button is located at the end of an elongate portion of the handle means so that the elongate portion can be gripped by a user's hand and the button pressed by a user's thumb. The button may constitute the first or the second actuation action, however preferably it constitutes the second actuation action.

Although the particulate material dispenser can take a variety of forms, it has been found that a particular arrangement allows further levels of independent control of the particulate material dispenser. As such it is preferred that the particulate material dispenser comprises a chamber having an open exit, wherein the chamber is adapted to be rotatable in use such that the open exit follows a pathway having both an upper region and a lower region, and arranged to pass through the lower region at a non-zero speed a plurality of times during a single serving; the open exit being sized to allow a portion of stored particulate material to fall out of the chamber via the open exit under gravity each time the open exit passes through the lower region of the pathway.

In such an arrangement, the container passes through the lower region at a positive speed and therefore for a specific amount of time, so that a controlled quantity of particulate material can leave the container via the open exit. However, as the chamber is rotatable to bring the open exit to the lower region a plurality of times, the amount dispensed each time the open exit passes through the lower region can be a relatively low quantity of particulate material, in particular a quantity that is lower than would eventually be dispensed in the single serving.

Thus, it is highly preferred that the rotation of the chamber is provided by a motor. Furthermore, it is preferred that the second actuation action actuates the motor.

To allow for even further levels of control it is preferred that the second actuation action allows variation in the speed of rotation of the chamber in use. For example, this could be achieved by the button comprising a gradual sensor, which detects the amount by which the button has been pressed. The more the button is pressed the faster the container rotates.

In one particularly preferred embodiment, the user selectable input allows variation in the speed of rotation of the chamber in use. In a further refinement of this embodiment however, it is preferred that the speed of rotation is fixed by the apparatus at a substantially constant value whilst the open exit overlaps with the opening in the housing, i.e. when the open exit is in its lower region. In this way, the amount of particulate material that leaves the open exit in each pass through the lower region is unaffected by the speed of rotation of the chamber. This allows the end user to increase or decrease the speed of rotation, as desired, according to whether more or less particulate material is desired for a single serving.

The apparatus as described and defined herein is primarily intended for use in the home. As such it is highly beneficial if the machine is not so sizeable that it cannot readily be positioned in a user's kitchen for example. As such, it is preferred that the apparatus can fit inside a cuboid container having a volume of no greater than $0.2m^3$, preferably no greater than $0.1m^3$.

The frozen confectionery material of the present invention may be aerated. The term "aerated" means that gas has been intentionally incorporated into the product, such as by mechanical means. The gas can be any food-grade gas such as air, nitrogen or carbon dioxide. The extent of aeration is typically defined in terms of "overrun" (OR). In the context of the present invention, %overrun is defined in volume terms (measured at atmospheric pressure) as:

$$OR = \frac{\text{volume of frozen aerated product} - \text{volume of premix at ambient temp}}{\text{volume of premix at ambient temp}} \times 100$$

The amount of overrun present in the product will vary depending on the desired product characteristics. In the context of the present invention the level of overrun is typically from 0 to 150%, preferably from 60 to 150%, more preferably from 60 to 100%.

Frozen confection material means a confection made by freezing a pasteurised mix of ingredients such as water, fat, sweetener, protein (normally milk proteins), and optionally other ingredients such as emulsifiers, stabilisers, colours and flavours. Frozen confection materials may be aerated. Frozen confection materials include ice cream, gelato, frozen yoghurt, sorbets, granitas, shaved ices and the like. Preferably the frozen confectionery material is an ice cream.

The particulate material can include discrete pieces of an edible material, such as commercially available confectionery pieces, candy, carbonated candy, chocolate, fruit (which may be e.g. fresh, dried, frozen or sugar-infused), frozen liquids, nut, seed, biscuit, cake, cookie, toffee, cereal, fudge, nougat, jelly, marshmallow and the like. Preferably the particulate material is from 1 mm to 10mm in size, more preferably from 2 to 9mm, most preferably from 5 to 8mm.

The invention will now be illustrated, by way of example only, and with reference to the following figures, in which:

Figure 1 is a perspective view of an apparatus according to a preferred embodiment of the present invention.

Figure 2 is a perspective view of the apparatus shown in figure 1 in use.

Figure 3 is a close-up perspective view of the handle means of the apparatus shown in figure 1.

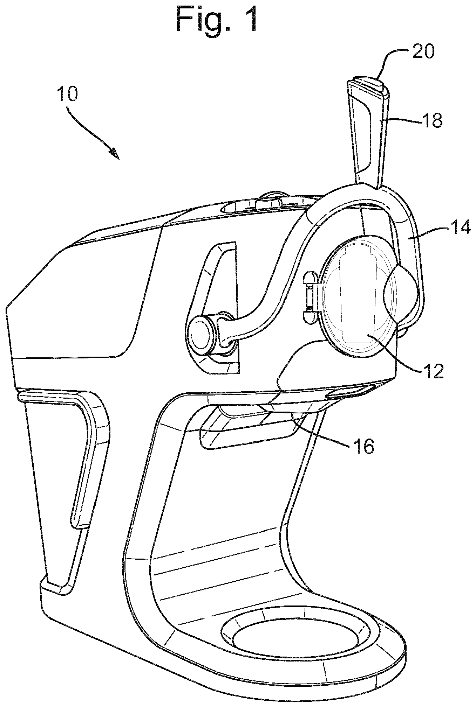

Turning to the figures, figure 1 shows an apparatus 10 according to a preferred embodiment of the invention which is adapted to deliver a frozen confection, e.g. ice cream, and associated particulate material added at the moment of delivery of the frozen confection. The apparatus is sized to be suitable for use in the home of a user.

The apparatus comprises a source of frozen confection (not shown) and a source of particulate material **12.**

The apparatus has a handle **14**, the downwards movement of which actuates the delivery of the frozen confectionery out of the outlet **16**. The handle also comprises a grippable portion **18** which comprises a button **20** on the end thereof. Pressing button **20** actuates the delivery of the particulate material to be delivered onto the flowing surface of the frozen confection material, as it is being dispensed.

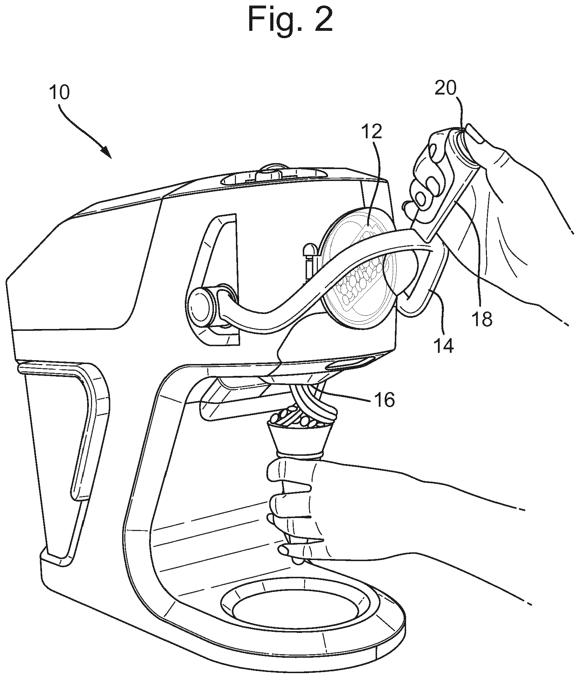

The use of the handle means **14** to independently actuate both the frozen confectionery material and the particulate material is shown in figure 2. As can be seen, container **12** can rotate within a stationary housing. The rotation of the rotatable housing is controlled by a motor (not shown) contained within the apparatus body.

Thus, a user can grip the grippable portion **18** and actuate the handle **14** to deliver the frozen confection by pulling downwards to move the handle **14** downwards. Independently of any downwards motion, a user can also press button **20** as desired to add as much or as little particulate material as is desired to the flowing frozen confection. Thus, in use the container **12** rotates and thus an open exit at one end of the container **12** follows a pathway which is a vertical circle. As the container rotates so that the open exit passes through the lower region of the pathway, a portion of particulate material is dispensed to be brought into contact with the flowing surface of the frozen confectionery.

Additionally, as the actuation of the frozen confection and the particulate material is independent, a user could, for example continue to dispense particulate material after a single serving of frozen confection has been dispensed, e.g. in order to generate a topping of particulate material. Alternatively a user can simply not press button **20** at all if no particulate material is desired for that serving.

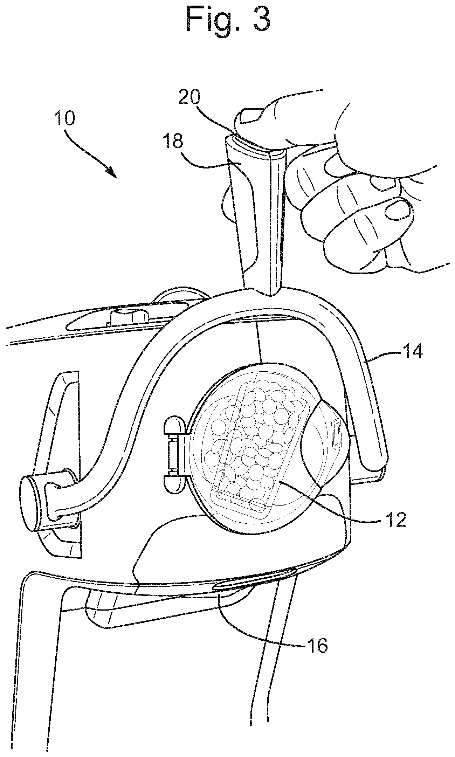

Figure 3 shows the handle means in the uppermost position and therefore in a position where no frozen confection is being delivered. However pressing the button **20** can still actuate the particulate material dispenser, as described above.

**Claims**

1.    An apparatus (10) for dispensing frozen confectionery comprising particulate material, the apparatus comprising:

>    a frozen confectionery dispenser,
>    a particulate material dispenser, and
>    a handle means (14);

>    wherein the handle means (14) is adapted to provide a first actuation action for activation of the frozen confectionery dispenser and a second actuation action for activation of the particulate material dispenser, wherein the first and second actuation actions are independent of each other.

2.    An apparatus according to claim 1, wherein the first actuation action comprises translation of the handle means (14).

3.    An apparatus according to claim 2, wherein the translation of the handle means (14) is from an upper to a lower position.

4.    An apparatus according to any one of the preceding claims wherein the second actuation action comprises pressing a switch or button (20).

5.    An apparatus according to any one of the preceding claims wherein the handle means (14) comprises a region (18) which is grippable by a single human hand so that the single human hand is capable of carrying out both the first and second actuations actions independently of each other.

6.    An apparatus according to any one of the preceding claims, wherein the first and or the second actuation action is gradual, wherein the greater the extent of the action is carried out the greater the rate of dispensing of frozen confectionery material and/or particulate material.

7. An apparatus according to any one of the preceding claims, wherein the particulate material dispenser comprises a chamber (12) having an open exit, wherein the chamber is adapted to be rotatable in use such that the open exit follows a pathway having both an upper region and a lower region, and arranged to pass through the lower region at a non-zero speed a plurality of times during a single serving;
the open exit being sized to allow a portion of stored particulate material to fall out of the chamber via the open exit under gravity each time the open exit passes through the lower region of the pathway.

8. An apparatus according to claim 7, wherein the rotation of the chamber (12) is provided by a motor.

9. An apparatus according to any one of claims 4 to 8, wherein the switch or button (20) actuates the motor.

10. An apparatus according to claim 9 wherein the switch or button (20) allows variation in the speed of rotation of the chamber (12) in use.

11. An apparatus according to claim 10, which is adapted to fix the speed of rotation at a substantially constant value whilst the open exit passes through its lower region.

12. An apparatus according to any one of the preceding claims, which can fit inside a cuboid container having a volume of no greater than $0.2m^3$, preferably no greater than $0.1m^3$.


**Patentansprüche**

1. Vorrichtung (10) zum Ausgeben von gefrorenem Konfekt, das Partikel enthält, wobei die Vorrichtung Folgendes umfasst:

   eine Ausgabeeinheit für gefrorenes Konfekt;
   eine Ausgabeeinheit für Partikel; und
   Griffmittel (14);

   wobei die Griffmittel (14) ausgelegt sind, einen ersten Betätigungsvorgang zum Aktivieren der Ausgabeeinheit für gefrorenes Konfekt und einen zweiten Betätigungsvorgang zum Aktivieren der Ausgabeeinheit für Partikel bereitzustellen, wobei der erste und der zweite Betätigungsvorgang voneinander unabhängig sind.

2. Vorrichtung nach Anspruch 1, wobei der erste Betätigungsvorgang eine Translation der Griffmittel (14) umfasst.

3. Vorrichtung nach Anspruch 2, wobei die Translation der Griffmittel (14) von einer oberen zu einer unteren Position erfolgt.

4. Vorrichtung nach einem der vorhergehenden Ansprüche, wobei der zweite Betätigungsvorgang das Drücken eines Schalters oder einer Taste (20) umfasst.

5. Vorrichtung nach einem der vorhergehenden Ansprüche, wobei die Griffmittel (14) einen Bereich (18) umfassen, der durch eine einzelne menschliche Hand so ergriffen werden kann, dass die einzelne menschliche Hand den ersten und den zweiten Betätigungsvorgang unabhängig voneinander ausführen kann.

6. Vorrichtung nach einem der vorhergehenden Ansprüche, wobei der erste und/oder der zweite Betätigungsvorgang stufenweise erfolgt, wobei die Ausgabemenge des gefrorenen Konfektmaterials und/oder der Partikel umso größer ist, je größer das Ausmaß der Aktion ist, die ausgeführt wird.

7. Vorrichtung nach einem der vorhergehenden Ansprüche,

   wobei die Partikelausgabeeinheit eine Kammer (12) umfasst, die einen offenen Ausgang aufweist, wobei die Kammer so ausgelegt ist, dass sie im Einsatz so gedreht werden kann, dass der offene Ausgang einem Pfad folgt, der einen oberen und einen unteren Bereich aufweist, und so ausgelegt ist, dass er während eines einzelnen Bedienvorgangs mehrfach mit einer Geschwindigkeit, die nicht Null ist, durch den unteren Bereich läuft;

wobei der offene Ausgang so bemessen ist, dass eine Portion der gespeicherten Partikel jedes Mal, wenn der offene Ausgang durch den unteren Bereich des Pfads läuft, aufgrund der Schwerkraft durch den offenen Ausgang aus der Kammer herausfällt.

8. Vorrichtung nach Anspruch 7, wobei die Drehung der Kammer (12) durch einen Motor bereitgestellt wird.

9. Vorrichtung nach einem der Ansprüche 4 bis 8, wobei der Schalter oder die Taste (20) den Motor einschaltet.

10. Vorrichtung nach Anspruch 9, wobei der Schalter oder die Taste (20) eine Änderung der Drehzahl der Kammer (12) im Einsatz ermöglicht.

11. Vorrichtung nach Anspruch 10, die so ausgelegt ist, dass die Drehzahl auf einen im Wesentlichen konstanten Wert festgelegt ist, während der offene Ausgang durch den unteren Bereich läuft.

12. Vorrichtung nach einem der vorhergehenden Ansprüche, die in einen würfelförmigen Behälter eingesetzt werden kann, der ein Volumen aufweist, das nicht größer als 0,2 m$^3$, vorzugsweise nicht größer als 0,1 m$^3$ ist.


**Revendications**

1. Appareil (10) de distribution de confiserie congelée comprenant un matériau particulaire, l'appareil comprenant :

   un distributeur de confiserie congelée,
   un distributeur de matériau particulaire, et
   un moyen de poignée (14) ;
   dans lequel le moyen de poignée (14) est adapté pour fournir une première action de manoeuvre pour l'activation du distributeur de confiserie congelée et une seconde action de manoeuvre pour l'activation du distributeur de matériau particulaire, dans lequel les première et seconde actions de manoeuvre sont indépendantes l'une de l'autre.

2. Appareil selon la revendication 1, dans lequel la première action de manoeuvre comprend la translation du moyen de poignée (14).

3. Appareil selon la revendication 2, dans lequel la translation du moyen de poignée (14) va d'une position supérieure vers une inférieure.

4. Appareil selon l'une quelconque des revendications précédentes, dans lequel la seconde action de manoeuvre comprend la pression d'un commutateur ou bouton (20).

5. Appareil selon l'une quelconque des revendications précédentes, dans lequel le moyen de poignée (14) comprend une région (18) qui peut être saisie par une seule main d'être humain de sorte que la seule main d'être humain est capable de réaliser à la fois les première et seconde actions de manoeuvre indépendamment l'une de l'autre.

6. Appareil selon l'une quelconque des revendications précédentes, dans lequel la première et ou la seconde action de manoeuvre est progressive, dans lequel plus l'action est réalisée amplement plus la vitesse de distribution de matériau de confiserie congelée et/ou de matériau particulaire est grande.

7. Appareil selon l'une quelconque des revendications précédentes, dans lequel le distributeur de matériau particulaire comprend une chambre (12) présentant une sortie ouverte, dans lequel la chambre est adaptée pour pouvoir tourner lors de l'utilisation de sorte que la sortie ouverte suit une trajectoire ayant à la fois une région supérieure et une région inférieure, et disposée pour passer à travers la région inférieure à une vitesse non égale à zéro plusieurs fois pendant un seul service ;
   la sortie ouverte étant dimensionnée pour permettre à une portion de matériau particulaire stocké de tomber à l'extérieur de la chambre via la sortie ouverte sous la gravité chaque fois que la sortie ouverte passe à travers la région inférieure de la trajectoire.

8. Appareil selon la revendication 7, dans lequel la rotation de la chambre (12) est fournie par un moteur.

**9.** Appareil selon l'une quelconque des revendications 4 à 8, dans lequel le commutateur ou bouton (20) actionne le moteur.

**10.** Appareil selon la revendication 9, dans lequel le commutateur ou bouton (20) permet la variation de la vitesse de rotation de la chambre (12) lors de l'utilisation.

**11.** Appareil selon la revendication 10, qui est adapté pour fixer la vitesse de rotation à une valeur pratiquement constante pendant que la sortie ouverte passe à travers sa région inférieure.

**12.** Appareil selon l'une quelconque des revendications précédentes, qui peut s'adapter à l'intérieur d'un récipient cuboïde présentant un volume d'au plus 0,2 m$^3$, de préférence d'au plus 0,1 m$^3$.

# Fig. 1

# Fig. 2

# Fig. 3

**EP 3 399 866 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011162796 A
- US 7621669 B
- US 20030183090 A